# EUROPÄISCHE PATENTSCHRIFT

(11) **EP 3 587 794 B1**
(45) Veröffentlichungstag und Bekanntmachung des Hinweises auf die Patenterteilung: **23.12.2020**
(21) Anmeldenummer: 19182298.0
(22) Anmeldetag: 25.06.2019
(51) Int. Cl.: F03C 1/26, F04B 49/00, F16H 61/4192

(54) **HYDROSTATISCHER FAHRANTRIEB UND VERFAHREN ZUR STEUERUNG DES HYDROSTATISCHEN FAHRANTRIEBES**
HYDROSTATIC DRIVE AND METHOD FOR ACTUATING A HYDROSTATIC DRIVE
MÉCANISME D'ENTRAÎNEMENT HYDROSTATIQUE ET PROCÉDÉ DE COMMANDE DU MÉCANISME D'ENTRAÎNEMENT HYDROSTATIQUE

(30) Priorität: 29.06.2018 DE 102018210685
(43) Veröffentlichungstag der Anmeldung: 01.01.2020
(73) Patentinhaber: Robert Bosch GmbH, 70442 Stuttgart (DE)
(72) Erfinder: Mutschler, Steffen, 89233 Neu-Ulm (DE); Lenzgeiger, Ulrich, 86424 Dinkelscherben (DE); Frasch, Michael, 89081 Ulm (DE); Mueller, Matthias, 89129 Langenau (DE)

(56) Entgegenhaltungen:
- DE-A1- 3 806 194
- DE-A1- 10 037 195
- DE-A1- 19 742 157
- DE-A1-102013 224 657

## Beschreibung

Die Erfindung betrifft einen hydrostatischen Fahrantrieb gemäß dem Oberbegriff des Patentanspruchs 1, sowie ein Verfahren zur Steuerung des hydrostatischen Fahrantriebs gemäß Patentanspruch 11.

Aus der Offenlegungsschrift DE 10 2013 224 657 A1 ist ein hydrostatischer Fahrantrieb bekannt. Ein gattungsgemäßer hydrostatischer Fahrantrieb hat eine Hydropumpe und einen von dieser in geschlossenem hydraulischem Kreis mit Druckmittel versorgbaren Hydromotor. Die Hydropumpe ist dabei mit einer Antriebsmaschine und der Hydromotor mit einem Abtrieb, beispielsweise einer Achse oder einem einzelnen Rad, koppelbar. Zur bedarfsgerechten Steuerung des Fahrantriebs weist zumindest die Primärmaschine, also die Hydropumpe, ein verstellbares Verdrängungsvolumen auf. Dieses ist über eine Verstelleinrichtung, beispielsweise einen Verstellzylinder, in seiner Größe verstellbar. Der Stellzylinder kann dabei in Abhängigkeit eines Fahrerwunsches, der beispielsweise über ein Gaspedal oder Bremspedal generiert wird, mit Druckmittel beaufschlagt werden.

Gemäß dem Datenblatt RG-E 92003 der Anmelderin ist eine Axialkolben-Verstellpumpe in Schrägscheibenbauweise bekannt, deren Druck, den sie dem hydraulischen Kreis bereitstellt, direkt steuerbar ist. Dies erfolgt über eine sogenannte ET-Steuerung. Dabei ist die Hydropumpe physisch derart ausgestaltet, dass der in der Druck stets dem Stelldruck des Stellzylinders entgegenwirkt. Die Hydropumpe weist baubedingt eine interne Regelschleife auf, sodass der Druck in Folge dieser Bauweise stets in Richtung seiner eignen Verringerung wirkt. Im Pumpenbetrieb der Hydropumpe führt dabei sein Ansteigen zur Verringerung und im Motorbetrieb zur Vergrößerung des Verdrängungsvolumens. Eine Kammer des Stellzylinders ist dem Zugbetrieb und eine andere, entgegenwirkende Kammer dem Schlepp- oder Bremsbetrieb des Fahrantriebes zugeordnet. Durch Vermessung der Hydropumpe bezüglich ihrer Parameter Druck, Stelldruck, Verdrängungsvolumen und Drehzahl ist ein Kennfeld der Hydropumpe bekannt, aus dem gemäß einem Gaspedal- oder Fahrerwunsch ein notwendiger Stelldruck ermittelbar ist. Dies erfolgt über eine elektronische Steuereinheit. Diese Steuerung der Hydropumpe ermöglicht es, einer Stellung des Gas- oder Fahrpedals direkt ein Antriebsmoment zuzuordnen, was vom Bediener als sehr direkte und daher gut zu kalkulierende Steuerung des Fahrantriebs wahrgenommen wird.

Zur Absicherung der hochdruckführenden Arbeitsleitungen sind in der Regel Druckbegrenzungsventile vorgesehen, die ab einem an ihnen eingestellten Grenzwert Druckmittel aus der druckführenden Arbeitsleitung entlassen. Da dies energetisch jedoch sehr nachteilig ist, ist in der Regel eine sogenannte Druckabschneidung etwa 30 bar unterhalb des am Druckbegrenzungsventil eingestellten Drucks, vorgesehen. Die Druckabschneidung ist im genannten Datenblatt so realisiert, dass ein gesondertes, geringer dimensioniertes Druckbegrenzungsventil vorgesehen ist, das in Öffnungsrichtung mit dem höchsten der Drücke der Arbeitsleitung und in Schließrichtung mit einem eingestellten Sollwert beaufschlagt ist. Erreicht der Arbeitsdruck den eingestellten Sollwert oder Abschneidewert, so wird über dieses Druckbegrenzungsventil eine Steuerdruckleitung, in der Steuerdruckmittel bei einem Druck von etwa 30bar bereitgestellt wird, entlastet. Da aus dem bereitgestellten Steuerdruckmittel über Druckreduzierventile ein Stelldruck der jeweiligen Kammer reduziert wird, sinkt auf diese Weise auch der maximal bereitstellbare Stelldruck. Entsprechend schwenkt im Pumpenbetrieb das Verdrängungsvolumen der Hydropumpe aufgrund geringeren Stelldrucks zurück, wodurch durch das geringere Fördervolumen der Hydropumpe der Druck oder Arbeitsdruck limitiert wird. Diese herkömmliche Limitierung oder Druckabschneidung basiert somit auf einem hydromechanischen Regelkreis mit dem genannten Druckbegrenzungsventil als hydromechanischem Regler.

An dieser Lösung nachteilig erweisen sich der vergleichsweise hohe vorrichtungstechnische Aufwand zur Ermittlung des höchsten der Drücke der Arbeitsleitungen, die Bereitstellung des Druckbegrenzungsventils zur Druckabschneidung, sowie der auftretende energetische Verlust durch Abblasen des Steuerdruckmittels über das Druckbegrenzungsventil. Hinzu kommt, dass die genannte Kombination aus elektronisch gesteuert verstellbarer Hydropumpe mit hydromechanisch geregelter Druckabschneidung in Transienten schwer oder nicht beherrschbar ist. Im alternativen Fall einer elektronisch geregelten Druckabschneidung auf Basis von Drucksensoren erfasster Druckwerte erweist sich diese als schwingungsanfällig und komplex.

Demgegenüber liegt der Erfindung die Aufgabe zugrunde, einen hydrostatischen Fahrantrieb mit einer Druckabschneidung mit stabilerem Verhalten, sowie ein Verfahren zur Steuerung des hydrostatischen Fahrantriebs mit Druckabschneidung zu schaffen.

Die erste Aufgabe wird gelöst durch einen hydrostatischen Fahrantrieb mit den Merkmalen des Patentanspruchs 1, die zweite durch ein Verfahren zur Steuerung des hydrostatischen Fahrantriebs mit den Merkmalen des Patentanspruchs 11.

Vorteilhafte Weiterbildungen des Fahrantriebs sind in den Patentansprüchen 2 bis 10, diejenigen des Verfahrens in den Patentansprüchen 12 bis 15 beschrieben.

Ein hydrostatischer Fahrantrieb hat eine Hydropumpe, die mit einer Antriebsmaschine koppelbar ist. Über die Hydropumpe ist ein mit einem Abtrieb koppelbare Hydromotor des Fahrantriebes mit Druckmittel versorgbar. Die Antriebsmaschine, beispielsweise ein Diesel- oder Elektromotor und / oder der Abtrieb können Bestandteil des Fahrantriebes sein. Die Hydropumpe ist mit verstellbarem Verdrängungs- oder Hubvolumen ausgestaltet, wobei zu dessen Verstellung ein Stellzylinder mit wenigstens einem Zylinderraum vorgesehen ist. Vorzugsweise ist der Stellzylinder, insbesondere dessen Kolben, mit einem Stellelement der Hydropumpe koppelbar oder gekoppelt, von dessen Stellung das Hubvolumen abhängt. Um den wenigstens einen Zylinderraum mit einem aufs Hubvolumen verstellend wirksamen Stelldruck zu beaufschlagen, ist wenigstens ein elektrisch ansteuerbares Druckventil, insbesondere Druckregel- oder Druckreduzierventil, vorgesehen und dem Zylinderraum zugeordnet. Mit dem Ziel einen Druck der Hydropumpe zu limitieren, sodass dieser beispielsweise ein oberes Limit nicht überschreitet, weist der Fahrantrieb eine Einrichtung auf, über die der Stelldruck beeinflussbar ist. In Folge bewirkt die Beeinflussung des Stelldrucks, insbesondere über dessen Einfluss auf das Hubvolumen, die Limitierung des Drucks. Diese Drucklimitierung durch Beeinflussung des Hubvolumens wird im Unterschied zur Druckbegrenzung, bei der der Druck durch Abblasen des Druckmittels über ein sich an einer eingestellten Druckgrenze öffnendes Druckbegrenzungsventil begrenzt wird, als Druckabschneidung bezeichnet. Erfindungsgemäß ist die Einrichtung derart ausgestaltet, dass über sie der Stelldruck - und in Folge der Druck - gesteuert, insbesondere modellbasiert gesteuert, limitierbar ist.

Verglichen mit herkömmlichen Lösungen, die auf einer Regelung des Drucks an dessen Limit basieren, und gemäß denen der Druck erfasst oder ermittelt werden muss, und in Folge der Stelldruck so beeinflusst wird, dass das Limit nicht überschritten wird, hat die erfindungsgemäß auf Steuerung basierende Lösung der Druckabschneidung mehrere Vorteile. So weist sie eine geringere Komplexität und stabileres Verhalten auf, da eine Schwingungsanfälligkeit, wie beispielsweise bei geregelter Druckabschneidung auf Basis von Drucksensoren, geringer ist oder sogar entfällt. Eine herkömmliche Lösung, bei der die Einrichtung als hydromechanischer Regler, beispielsweise als mit dem Druck beaufschlagtes Druckbegrenzungsventil ausgestaltet ist, bei dessen Ansprechen ein bereitgestellter Steuerdruck, aus dem der Stelldruck über das Druckventil reduziert wird, absinkt, kann anfällig für nur schwer oder sogar unkontrollierbare Transienten bei Übergängen von dieser hydromechanischen Regelung der Druckabschneidung zur elektronischen Ansteuerung des Druckventils - also zur elektronischen Pumpensteuerung - sein. In diesem Fall kann es zu einem unkontrollierten Erhöhen des Hubvolumens der Hydropumpe kommen. Mit der erfindungsgemäß steuernden Druckabschneidung ist dieses Problem jedoch eliminiert. Zudem kann beispielsweise auf eine Druckerfassung zum Zwecke der Regelung verzichtet werden, wodurch der hydrostatische Fahrantrieb vorrichtungstechnisch weniger aufwändig und kostengünstiger ausgestaltet sein kann.

In einer Weiterbildung ist die Hydropumpe derart gebaut oder ausgestaltet, dass der Druck dem verstellend wirksamen Stelldruck entgegenwirkt. Der Druck wirkt dabei stets in Richtung seiner eigenen Verringerung, wodurch die Hydropumpe eine interne Regelwirkung aufweist. Im Falle einer als Axialkolbenpumpe in Schrägscheibenbauweise ausgestalten Hydropumpe ist dies beispielsweise dadurch realisiert, dass deren Steuerscheibe als Schnittstelle zwischen hydrostatischen Arbeitsräumen und dem Druck- und Niederdruckanschluss verdrillt angeordnet oder ausgebildet ist.

In einer Weiterbildung ist das Hubvolumen der Hydropumpe über den Stellzylinder beidseitig eines Nullvolumens oder einer Neutralstellung verstellbar. Dies erweist sich als vorteilhaft, um bei gleichbleibender Drehrichtung - insbesondere aufgrund der vorzugsweise mit konstanter Drehrichtung ausgestalteten Antriebsmaschine - eine Fahrrichtungsumkehr vorrichtungstechnisch einfach ohne Schaltgetriebe zu ermöglichen.

Um die erfindungsgemäße gesteuerte Limitierung sowohl im Zugbetrieb des Fahrantriebes, der dem Pumpenbetrieb der Hydropumpe entspricht, als auch im Schlepp- oder Bremsbetrieb des Fahrantriebes, der dem Motorbetrieb der Hydropumpe entspricht, bereitstellen zu können, weist der Stellzylinder einen dem ersten entgegenwirkenden zweiten Zylinderraum auf und es ist ein elektrisch ansteuerbares, zweites Druckventil vorgesehen, über das der zweite Zylinderraum mit einem verstellend wirksamen zweiten Stelldruck beaufschlagbar ist. Erfindungsgemäß ist über die Einrichtung der Druck der Hydropumpe auch mittels Beeinflussung des zweiten Stelldrucks gesteuert limitierbar.

Die beiden Druckventile können einzeln aufgelöste Ventilkolben oder einen gemeinsamen Ventilkolben aufweisen.

In einer Weiterbildung ist die Einrichtung derart ausgestaltet, dass über sie das Hubvolumen der Hydropumpe oder eine dem Hubvolumen zugrundeliegende Größe - beispielsweise ein Schwenkwinkel einer Schrägscheibe im Falle der als Axialkolbenmaschine in Schrägscheibenbauweise ausgestalteten Hydropumpe - über eine Bilanzierung des Druckmittelvolumenstroms ermittelbar, insbesondere berechenbar ist. Insbesondere gehen in die Bilanz zumindest eine jeweilige Drehzahl der Hydropumpe und des Hydromotors, sowie dessen Hubvolumen ein. Alternativ oder ergänzend kann der Fahrantrieb ein Mittel zur Erfassung des Hubvolumens oder der Größe aufweisen.

Vorzugsweise hat der Fahrantrieb hierfür Drehzahlerfassungseinheiten, die mit der Einrichtung signalverbunden sind, und über die die Drehzahlen der Hydropumpe und des Hydromotors erfassbar sind. Die Drehzahl der Hydropumpe kann alternativ oder ergänzend von einer Steuerung oder einer Drehzahlerfassungseinheit der Antriebsmaschine bereitgestellt sein.

Ist der Hydromotor mit konstantem Hubvolumen ausgestaltet, so ist das für die Bilanzierung notwendige aktuelle Hubvolumen das Nenn-Hubvolumen und somit stets bekannt. Vorzugsweise ist das Nenn-Hubvolumen in der Einrichtung, insbesondere zum Zwecke der Bilanzierung, abgelegt.

Ist der Hydromotor mit direktgesteuertem, insbesondere mit elektroproportional gesteuertem, verstellbarem Hubvolumen ausgestaltet, so ist in der Einrichtung vorzugsweise eine Kennlinie aus Hubvolumen des Hydromotors und dessen Ansteuerstrom abgelegt. Auf diese Weise kann über die Einrichtung aus dem Ansteuerstrom direkt auf das Hubvolumen des Hydromotors geschlossen werden.

Das Hubvolumen der Hydropumpe ergibt sich dann zu V_{P} = n_{M} V_{M}/n_{P}.

In einer bevorzugten Weiterbildung ist die Einrichtung als eine elektronische Steuereinheit ausgestaltet.

In einer bevorzugten Weiterbildung hat die Einrichtung, insbesondere für sowie den Pumpenbetrieb und den Motorbetrieb der Hydropumpe, jeweils eine Kennlinie der Hydropumpe, in der der Stelldruck, insbesondere der Stelldruck für den Pumpenbetrieb und der zweite Stelldruck für den Motorbetrieb, in Abhängigkeit vom Limit des Drucks und zumindest vom Hubvolumen der Hydropumpe oder der diesem Hubvolumen zugrundeliegenden Größe (Schwenkwinkel) beschrieben ist. So kann über die Einrichtung aus einem Betriebszustand der Hydropumpe (Hubvolumen oder Schwenkwinkel der Hydropumpe) für das vorgegebene Limit ein maximal zulässiger Stelldruck im Pumpenbetrieb und ggf. zweiter Stelldruck im Motorbetrieb ermittelt werden.

Um die erfindungsgemäße Steuerung des Stelldrucks und ggf. zweiten Stelldrucks nicht nur am Limit sondern auch für andere Betriebszustände, insbesondere in Abhängigkeit eines Fahrerwunsches, zu ermöglichen, hat die Einrichtung in einer Weiterbildung - insbesondere jeweils für den Pumpenbetrieb und den Motorbetrieb der Hydropumpe - ein Kennfeld oder eine Schar von Kennlinien der Hydropumpe, in der der Stelldruck und ggf. der zweite Stelldruck in Abhängigkeit des Drucks und zumindest des Hubvolumens der Hydropumpe oder der diesem Hubvolumen zugrundeliegenden Größe (Schwenkwinkel) der Hydropumpe beschrieben ist.

Die Genauigkeit der Steuerung kann erhöht werden, wenn in einer Weiterbildung in der Kennlinie und / oder dem Kennfeld der Stelldruck und ggf. der zweite Stelldruck in Abhängigkeit der Drehzahl der Hydropumpe beschrieben ist.

In einer Weiterbildung kann über die Einrichtung aus der Kennlinie, ggf. den Kennlinien, ein zur Wahrung des Limits maximal zulässiger Stelldruck, und ggf. zweiter Stelldruck, in Abhängigkeit des aktuellen Hubvolumens der Hydropumpe oder in Abhängigkeit des aktuellen Hubvolumens und der aktuellen Drehzahl ermittelt werden.

Zur erfindungsgemäßen Steuerung des Fahrantriebes nicht nur am Limit, sondern auch in anderen Betriebszuständen unterhalb des Limits, weist dieser in einer Weiterbildung eine Anforderungsschnittstelle, beispielsweise eine Bedienschnittstelle in Ausgestaltung eines Fahrpedals und /oder Bremspedals auf, die mit der Einrichtung (32) signalverbindbar oder signalverbunden ist oder sind. Über diese ist dann von einem Fahrer ein Fahrerwunsch in Form einer Geschwindigkeitsanforderung an die Einrichtung übermittelbar.

In einer Weiterbildung kann über die Einrichtung aus dem oder den Kennfeldern ein gemäß dem Fahrerwunsch notwendiger Stelldruck, und ggf. zweiter Stelldruck, ermittelt werden.

Um stets sicherzustellen, dass der Fahrerwunsch bestmöglich erfüllt wird, das Limit jedoch nie überschritten wird, ist die Einrichtung in einer Weiterbildung derart ausgestaltet, dass über sie für den Stelldruck, und ggf. für den zweitem Stelldruck, ein kleinerer aus dem maximal zulässigen und dem notwendigem Stelldruck ermittelbar und / oder auswählbar ist.

Um schließlich das Druckventil, und ggf. das zweite Druckventil, unter Wahrung des Limits ansteuern zu können, ist in der Einrichtung in einer Weiterbildung eine Ventilkennlinie für jedes Druckventil abgelegt, in der ein jeweiliger elektrischer Ansteuerstrom in Abhängigkeit des, insbesondere als kleiner ermittelten, Stelldrucks beschrieben ist. Über die Einrichtung kann so aus der Ventilkennlinie der "erlaubte" elektrische Ansteuerstrom i ermittelt werden und im Pumpenbetrieb das eine Druckventil und im Motorbetrieb das ggf. zweite Druckventil angesteuert werden.

Ein Verfahren zum Limitieren eines Drucks einer Hydropumpe eines Fahrantriebes, der gemäß wenigstens einem Aspekt der vorhergehenden Beschreibung ausgestaltet ist, weist erfindungsgemäß einen Schritt Steuerndes Limitieren des Drucks mittels Beeinflussung, insbesondere Steuern, des wenigstens einen Stelldrucks über die Einrichtung auf. Hierbei, und auch im Zuge der nachfolgend genannten Weiterbildungen des Verfahrens, kommen die Vorteile zum Tragen, die bereits im Rahmen des erfindungsgemäßen Fahrantriebes besprochen wurden, sodass auf eine erneute Nennung verzichtet wird.

In einer Weiterbildung hat das Verfahren einen Schritt oder Schritte Ermitteln eines Zugbetriebes oder Bremsbetriebes des Fahrantriebes, und /oder Ermitteln einer Fahrtrichtung des Fahrantriebes, und / oder Auswählen von Kennlinie und / oder Kennfeld der Hydropumpe und / oder des Druckventils in Abhängigkeit des ermittelten Betriebes und / oder der ermittelten Fahrtrichtung, über die Einrichtung.

In einer Weiterbildung hat das Verfahren einen Schritt Ermitteln des maximal zulässigen Stelldrucks aus einer Kennlinie der Hydropumpe, in der der Stelldruck in Abhängigkeit eines Limits des Drucks und zumindest in Abhängigkeit eines Hubvolumens der Hydropumpe oder einer dieses Hubvolumen repräsentierenden Größe der Hydropumpe beschrieben ist, über die Einrichtung.

In einer Weiterbildung hat das Verfahren einen Schritt Ermitteln eines notwendigen Stelldrucks gemäß einer Geschwindigkeitsanforderung aus einem Kennfeld der Hydropumpe, in der der Stelldruck in Abhängigkeit des Drucks und zumindest in Abhängigkeit eines Hubvolumens der Hydropumpe oder einer dieses Hubvolumen repräsentierenden Größe der Hydropumpe beschrieben ist, über die Einrichtung.

In einer Weiterbildung hat das Verfahren Schritte Ermitteln eines kleineren aus notwendigem und maximal zulässigem Stelldruck, Ermitteln eines elektrischen Ansteuerstroms des Druckventils aus einer Ventilkennlinie des Druckventils, in der der elektrische Ansteuerstrom in Abhängigkeit des Stelldrucks beschrieben ist, gemäß dem ermittelten kleineren der Stelldrücke, und Ansteuern des Druckventils mit diesem Ansteuerstrom, über die Einrichtung.

Die genannten Schritte gelten vorzugsweise für den Pumpenbetrieb der Hydropumpe. In deren Motorbetrieb weist das Verfahren in einer Weiterbildung die gleichen Schritte bezüglich des zweiten Stelldrucks zur Beaufschlagung der zweiten Zylinderkammer auf.

In einer Weiterbildung des Fahrantriebs und / oder des Verfahrens ist eine variable Vorgabe des Drucks und / oder des Limits vorgesehen, sodass ein Drehmoment der Hydropumpe und / oder eine Leistung der Hydropumpe in Abhängigkeit von Faktoren, wie beispielsweise Fahrgeschwindigkeit, Temperatur oder anderem, steuerbar ist oder sind.

Im Motorbetrieb der Hydropumpe kann beim Reversieren über die erfindungsgemäße Druckabschneidung ein Ansprechen von Druckbegrenzungsventilen verhindert werden.

Die erfindungsgemäße Druckabschneidung erlaubt beim Reversieren und Verzögern eine Steuerung eines Bremsdrucks.

In einer Weiterbildung ist ein Abgleich der erfindungsgemäßen elektronischen Steuerung mit der realen Pumpenphysik möglich: So kann beispielsweise eine Einstellung der Hydropumpe an einem Prüfstand unter definierten Bedingungen erfolgen, können notwendige Ansteuersignale oder -ströme am Prüfstand unter definierten Bedingungen ermittelt werden und als Parameter an die Steuereinheit - insbesondere an deren Software - übermittelt werden, und ein automatischer Abgleich der Parameter kann in der Steuereinheit im Sinne einer Kalibrierfunktion erfolgen.

Die erfindungsgemäße Steuerung ist, insbesondere vorrichtungstechnisch und verfahrenstechnisch, einfach auf verschiedenste Bauarten und Nenngrößen von Hydropumpen übertragbar.

Zwei Ausführungsbeispiele eines erfindungsgemäßen hydrostatischen Fahrantriebes, sowie ein Ausführungsbeispiel eines erfindungsgemäßen Verfahrens zu dessen Steuerung, sind in den Zeichnungen dargestellt. Anhand der Figuren dieser Zeichnungen wird die Erfindung nun näher erläutert.

Es zeigen:
Fig. 1a einen hydraulischen Schaltplan eines hydrostatischen Fahrantriebes gemäß einem ersten Ausführungsbeispiel,
Fig. 1b einen hydraulischen Schaltplan eines hydrostatischen Fahrantriebes gemäß einem zweiten Ausführungsbeispiel,
Fig. 2 ein einfaches Blockbild eines Verfahrens zur Steuerung des hydrostatischen Fahrantriebs mit Eingangs- und Ausgangsgrößen gemäß einem Ausführungsbeispiel,
Fig. 3a und 3b Charakteristiken des hydrostatischen Fahrantriebes gemäß den Figuren 1a und 1b, und
Fig. 4 ein detaillierteres Blockbild des Verfahrens gemäß Figur 2.

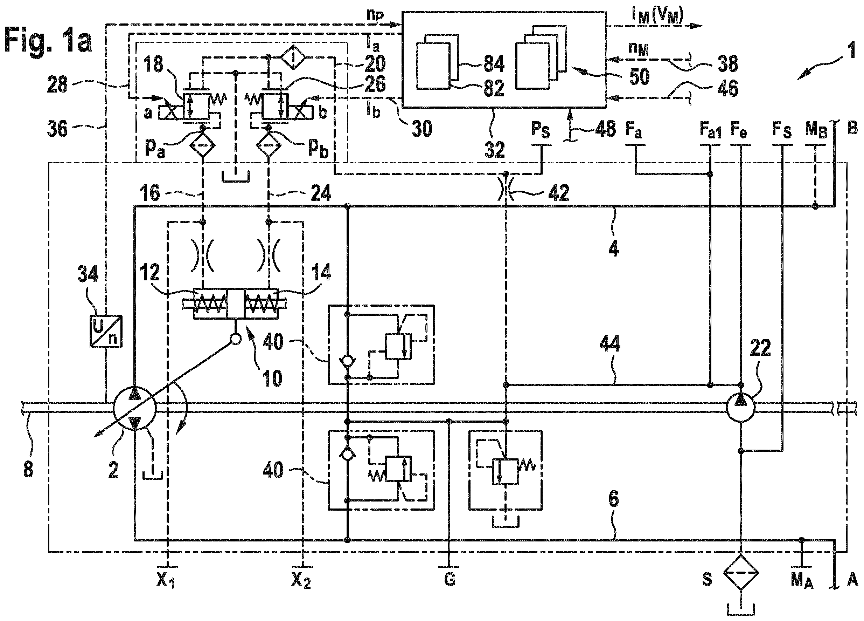

Gemäß Figur 1a hat ein hydrostatischer Fahrantrieb 1 eine Hydropumpe 2, die in geschlossenem hydraulischem Kreislauf über die Arbeitsleitungen 4 und 6 mit einem nicht dargestellten Hydromotor zu dessen Druckmittelversorgung fluidisch verbunden ist. Dabei ist die Hydropumpe 2 mit einer Antriebsmaschine (nicht dargestellt) über eine Triebwelle 8 zur Übertragung eines Drehmoments gekoppelt. Die Kopplung ist dabei nicht übersetzt, so dass die Drehzahl der Antriebsmaschine und der Hydropumpe 2 identisch sind. Die Hydropumpe 2 ist als Axialkolbenpumpe in Schrägscheibenbauweise ausgestaltet und kann in beiden Drehrichtungen und sowohl im Pumpen- als auch im Motorbetrieb betrieben werden. Sie hat ein verstellbares Verdrängungsvolumen V_{P} und eine als doppelt wirkender Hydrozylinder ausgestaltete Verstelleinrichtung 10. Der Hydrozylinder 10 hat eine erste Zylinderkammer 12 und eine der ersten entgegenwirkende, zweite Zylinderkammer 14. Die erste Zylinderkammer 12 ist über eine erste Stelldruckleitung 16 mit dem Ausgang eines ersten Druckreduzierventils 18 verbunden. Letztgenanntes ist an eine Steuerdruckleitung 20 angeschlossen, die über einen Steuerdruckanschluss p_{S} und über eine Speisepumpe 22, die auf der gleichen Triebwelle 8, wie die Hydropumpe 2 sitzt, mit Steuerdruckmittel versorgbar ist. In gleicher Weise ist die zweite Zylinderkammer 14 über eine zweite Stelldruckleitung 24 mit einem zweiten Druckreduzierventil 26 verbunden, welches an die Steuerdruckleitung 20 angeschlossen ist. Die Druckreduzierventile 18, 26 sind elektromagnetisch betätigbar, wobei der jeweils in der Stelldruckleitung 16 bzw. 24 resultierende Stelldruck pₐ bzw. p_{b} gemäß einer Ventilkennlinie proportional zu einem Ansteuerstrom Iₐ bzw. I_{b} des Elektromagnets a bzw. b ist. Über die elektromagnetische Betätigung der Druckreduzierventile 18, 26 können somit über die Vorgabe der Ansteuerströme I_{a,} I_{b} die Stelldrücke pₐ, p_{b} der Zylinderkammern 12, 14 gesteuert werden. Zu diesem Zweck sind die Elektromagnete a, b der Druckreduzierventile 18, 26 über eine jeweilige Signalleitung 28 bzw. 30 mit einer elektronischen Steuereinheit 32 signalverbunden.

Des Weiteren hat der hydrostatische Fahrantrieb 1 eine Drehzahlerfassungseinheit 34, über die eine Drehzahl np der Hydropumpe 2 erfassbar und über eine Signalleitung 36 an die elektronische Steuereinheit 32 übermittelbar ist. Ebenso hat der Fahrantrieb 1 eine Drehzahlerfassungseinheit (nicht dargestellt), über die die Drehzahl n_{M} des Hydromotors erfassbar und über die Signalleitung 38 an die elektronische Steuereinheit 32 übermittelbar ist.

Zur sicherheitsrelevanten Druckabsicherung der Arbeitsleitungen 4, 6 gegen Überlast hat der hydrostatische Fahrantrieb 1 jeweils ein Druckbegrenzungsventil 40, das mit der jeweiligen Arbeitsleitung 4, 6 verbunden ist. Beide Druckbegrenzungsventile 40 sind mit ihren Ausgängen an eine Speisedruckleitung 44 angeschlossen, die mit der Speisepumpe 22 verbunden ist. Die Speisedruckleitung 44 ist über eine Drossel 42 mit der Steuerdruckleitung 20 fluidisch verbunden. Im Falle des Ansprechens der Druckbegrenzungsventile wird somit Druckmittel in die Speisedruckleitung 44 entspannt, wodurch energetischen Verluste geringer sind, als wenn die Entspannung zum Tank T hin geschähe. Die Druckbegrenzungsventile 40 weisen jeweils eine Speise- oder Nachsaugfunktion in Form eines Rückschlagventils auf.

Der hydrostatische Fahrantrieb 1 kann sowohl im Zugbetrieb als auch im Schlepp- oder Bremsbetrieb betrieben werden. Im Zugbetrieb arbeitet die Hydropumpe 2 im Pumpenbetrieb, im Bremsbetrieb arbeitet sie im Motorbetrieb. Zudem ist die Hydropumpe 2 reversierbar, das heißt ihr Verdrängungsvolumen V_{P} ist über die Verstelleinrichtung 10 beidseitig einer Neutralstellung mit Nullvolumen V_{P} = 0 verstellbar. Dadurch ist bei gleichbleibender Drehrichtung der Triebwelle 8 und der Antriebsmaschine (Dieselmotor) eine Fahrtrichtungsumkehr möglich.

Die elektronische Steuereinheit 32 ist über eine Signalleitung 46 mit einer Bedienerschnittstelle in Form eines Fahrpedals (nicht dargestellt) verbunden. Über das Fahrpedal wird dabei von einem Fahrer oder einer Fahrerin eine Geschwindigkeitsanforderung an die elektronische Steuereinheit 32 übermittelt. Diese kann sowohl die Rückwärtsfahrt als auch die Vorwärtsfahrt betreffen. Wird das Fahrpedal betätigt, so entspricht das dem Zug- oder Pumpenbetrieb der Hydropumpe 2, wird das Fahrpedal hingegen zurückgenommen, entspricht dies dem Brems- oder Motorbetrieb der Hydropumpe 2. Auch die Betätigung einer Fahrbremse (nicht dargestellt) entspricht dem Brems- oder Motorbetrieb der Hydropumpe 2. Die Steuereinheit ist derart ausgestaltet, dass sie anhand der genannten Betätigung den entsprechenden Betrieb ermitteln kann. Zur Auswahl einer Fahrtrichtung weist der hydrostatische Fahrantrieb 1 zudem einen betätigbaren Fahrtrichtungsschalter (nicht dargestellt) auf, der über eine Signalleitung 48 mit der elektronischen Steuereinheit 32 signalverbunden ist. In Abhängigkeit seiner Stellung erfolgt die Ansteuerung der Hydropumpe 2 in ihrem reversierten oder nicht reversierten Verstellbereich, also diesseits oder jenseits der Neutralstellung des Hubvolumens der Hydropumpe 2. Für die weitere Betrachtung seien folgende Fahrzustände definiert:
Vorwärtsfahrt, Zugbetrieb: Druckbeaufschlagung der ersten Zylinderkammer 12 über die erste Stelldruckleitung 16 und das erste Druckreduzierventil 18 mit dem erstem Stellruck pₐ durch Ansteuern des ersten Druckreduzierventils 18 mit dem Ansteuerstrom Iₐ über die Steuereinheit 32 über die erste Signalleitung 28.

Vorwärtsfahrt, Bremsbetrieb: Druckbeaufschlagung der zweiten Zylinderkammer 14 über die zweite Stelldruckleitung 24 und das zweite Druckreduzierventil 26 mit dem zweiten Stelldruck p_{b} durch Ansteuern des zweiten Druckreduzierventils 26 mit dem Ansteuerstrom I_{b} über die Steuereinheit 32 über die Signalleitung 30.

Rückwärtsfahrt, Zugbetrieb: Druckbeaufschlagung der zweiten Zylinderkammer 14 über die Kette 24, 26, 30, 32.

Rückwärtsfahrt, Bremsbetrieb: Druckbeaufschlagung der ersten Zylinderkammer 12 über die Kette 16, 18, 28, 32.

In beiden gezeigten Ausführungsbeispielen eines hydrostatischen Fahrantriebs 1; 101 ist die Hydropumpe 2 derart ausgestaltet, dass der Druck p, der in der hochdruckführenden der Arbeitsleitungen 4, 6 ansteht, dem dann wirksamen Stelldruck pₐ oder p_{b} entgegenwirkt und in Richtung seiner eigenen Verringerung wirksam ist. Hierzu weist die Hydropumpe 2 eine konstruktiv realisierte Regelschleife auf. Im vorliegenden Fall der als Axialkolbenpumpe in Schrägscheibenbauweise ausgestalteten Hydropumpe 2 ist dies so realisiert, dass eine Steuerscheibe der Hydropumpe 2 bezüglich einer Drehachse ihrer Zylindertrommel verdrillt angeordnet ist. Mündungen derjenigen Zylinder, die mit der den Druck (Hochdruck) aufweisenden Druckniere Steuerscheibe verbunden sind, sind dadurch bezüglich einer Schwenkachse der Schrägscheibe unsymmetrisch verteilt angeordnet. Ebenso unsymmetrisch verteilt sind dann die an der Schrägscheibe abgestützten Endabschnitte der in den Zylindern geführten Arbeitskolben. Aus den somit unsymmetrisch wirkenden Stützkräften der Arbeitskolben resultiert an der Schrägscheibe ein im Pumpenbetrieb rückschwenkendes und im Motorbetrieb ausschwenkendes Moment. In der Konsequenz entsteht ein Zusammenhang in Form einer Pumpenkennlinie oder eines Kennfeldes von Pumpenkennlinien der Hydropumpe 2, in dem der jeweilige Stelldruck pₐ, p_{b} in Abhängigkeit des Drucks p und des Hubvolumens V_{P} der Hydropumpe 2, sowie von deren Drehzahl np beschreibbar ist. Diese Kennlinien oder Kennfelder sind vermessen und in der elektronischen Steuereinheit 32 zur Verarbeitung, insbesondere zur Ausführung des später beschriebenen Verfahrens, abgelegt.

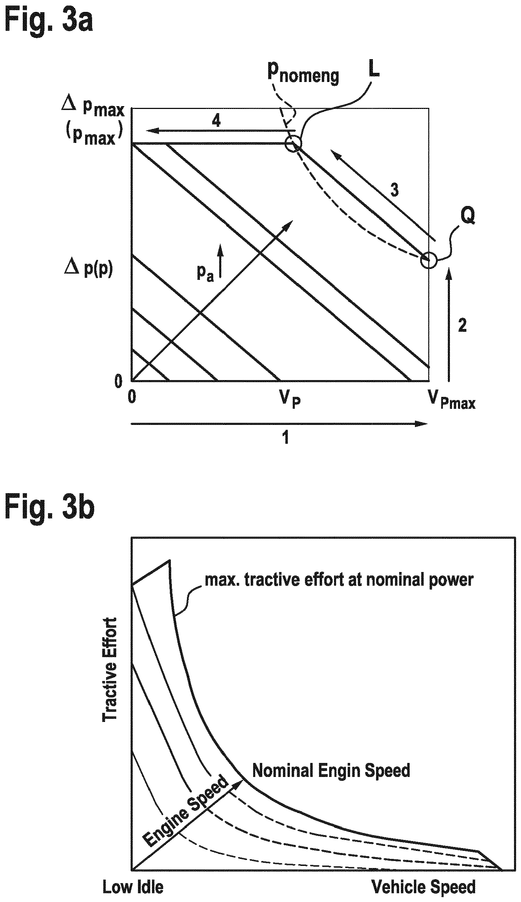

Es folgt die Beschreibung eines Fahrbetriebes des hydrostatischen Fahrantriebes 1; 101 anhand der Figuren 3a, 3b. In Figur 3a ist eine Charakteristik der Hydropumpe 2 mit openloop-control, das heißt mit direkt gesteuertem Verdrängungs- oder Hubvolumen V_{P} dargestellt. In Abhängigkeit des Verdrängungsvolumens V_{P} ist der Druck p, genauer gesagt die Druckdifferenz Δp zwischen den Arbeitsleitungen 4, 6, aufgetragen. Als Parameter ist der erste Stelldruck pₐ der ersten Zylinderkammer 12 aufgetragen. Dieser steigt ausgehend vom Ursprung 0/0 an. Als begrenzende Leistung ist die Nennleistung der Dieselantriebsmaschine P_{nomeng} als gestrichelte Kurve dargestellt. Ausgangspunkt der Beschreibung sei ein unbetätigtes Gas- oder Fahrpedal und eine im Leerlauf bei Leerlaufdrehzahl drehende Antriebsmaschine. Gemäß dem Pfeil 1 erfolgt zunächst eine Betätigung des Fahrpedals durch den Bediener, wodurch die Drehzahl der Antriebsmaschine (Diesel) von Leerlauf auf Nenndrehzahl erhöht wird. Dementsprechend erfolgt über die elektronische Steuereinheit 32 in Abhängigkeit der Drehzahl des Dieselmotors ein Ansteuersignal oder Ansteuerstrom Iₐ für die Hydropumpe 2, genauer gesagt für deren erstes Druckreduzierventil 18. Mit Erreichen der Nenndrehzahl der Antriebsmaschine wird eine maximale Fahrgeschwindigkeit des Fahrantriebs 1 erhalten. Demgemäß wird der erste Stelldruck pₐ gemäß einem in der elektronischen Steuereinheit 32 gemäß Figur 1a abgelegten Kennfeld der Hydropumpe 2 erhöht. Da noch keine Last wirkt, schwenkt die Hydropumpe 2 voll auf ihr maximales Hubvolumen V_{Pmax} aus und liefert bei Nenndrehzahl ihren maximalen Volumenstrom Qₘₐₓ.

Durch auftretende Fahrwiderstände stellt sich beim Fahren in einer Ebene ein Druck oder Lastdruck p, beispielsweise 250 bar, ein. Dieser Vorgang wird in Figur 3a durch den mit der Ziffer 2 bezeichneten Pfeil symbolisiert. Im Diagramm gemäß Figur 3a wird dann ein Punkt Q erreicht, der auf der Kurve P_{nomeng} liegt. An diesem ist der erste Stelldruck pₐ bei der Nenndrehzahl so bemessen, dass die hydraulische Leistung pQₘₐₓ der Hydropumpe 2 der Nennleistung P_{nomeng} entspricht.

Nimmt nun, beispielsweise bei einer Bergfahrt oder bei einer Kiesaufnahme im Falle eines Radladers, die Last am Fahrantrieb 1; 101 zu, so erhöht sich der Druck p. Aufgrund der vorgenannten Ausgestaltung der Hydropumpe 2, bei der im Zugbetrieb der Hydropumpe 2 in Vorwärtsfahrt der Arbeitsdruck p dem ersten Stelldruck pₐ in Richtung einer Verringerung des Hubvolumens V_{P} entgegenwirkt, schwenkt der Druck p die Schwenkwiege der Hydropumpe 2 zurück, wodurch sich die Fahrt verlangsamt. Der erste Stelldruck pₐ wird währenddessen nicht verändert und entspricht der den Punkt Q schneidenden, die Verringerung des Hubvolumens V_{P} und gleichzeitige Erhöhung des Drucks p bzw. der Druckdifferenz Δp darstellenden, Geraden (Pfeil 3).

Mit Erreichen eines Punkts L im Diagramm gemäß Figur 3a wird ein maximal zulässiger Druck pₘₐₓ oder Abschneidedruck, bzw. eine maximale zulässige Druckdifferenz Δpₘₐₓ erreicht. Aufgabe der elektronischen Steuereinheit 32 ist es nun, dafür zu sorgen, dass dieses Limit pₘₐₓ, Δpₘₐₓ nicht überschritten wird. Demgemäß erfolgt bei weiter zunehmender Last keine weitere Erhöhung des Drucks p, indem der erste Stelldruck pₐ über die Steuereinheit 32 über das Druckreduzierventil 18 gemäß Figur 1a derart abgesenkt wird, dass der Druck pₘₐₓ nicht überschritten wird. Dementsprechend bewegt man sich in gemäß Figur 3a entlang einer Block- oder Limitkurve, die sich waagrecht vom Punkt L mit konstantem Druck pₘₐₓ bzw. konstanter Druckdifferenz Δpₘₐₓ nach links erstreckt. Ist also beispielsweise in der Steuereinheit 32 ein maximal zulässiger Druck pₘₐₓ von beispielsweise 450bar eingestellt, so greift die Steuereinheit 32 gemäß erfindungsgemäßer Druckabschneidung ein und nimmt den ersten Stelldruck pₐ zurück. Dadurch kann auch bei weiter steigender Last eine Überschreitung des maximal zulässigen Drucks pₘₐₓ verhindert werden.

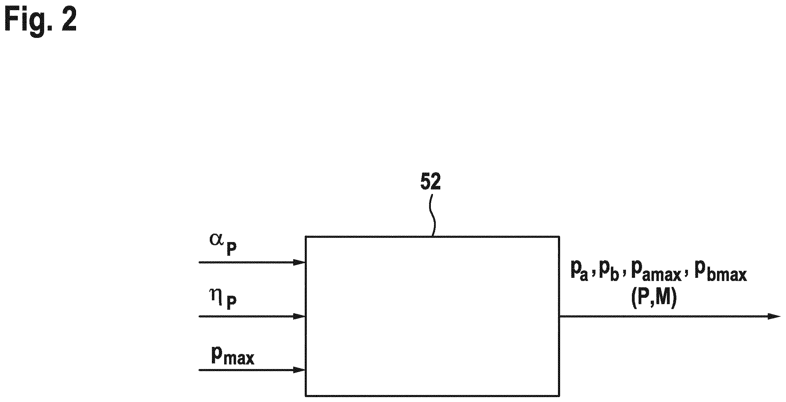

Figur 2 zeigt ein Blockschaltbild eines Ausführungsbeispiels eines erfindungsgemäßen Verfahrens 52. Als Eingangsgrößen in das Verfahren 52 sind zu nennen: Ein zum Hubvolumen V_{P} proportionaler Schwenkwinkel ap der Hydropumpe 2, deren Drehzahl np und das zu definierende oder vorbestimmte Limit pₘₐₓ des maximal zulässigen Arbeitsdrucks. Über das Verfahren 52 erfolgt eine elektronische Druckabschneidefunktion auf der Datenbasis einer invertierten Pumpencharakteristik. Als Ausgangsgröße werden über das Verfahren 52 zum Einen die Stelldrücke pₐ, p_{b} für den normalen Fahrbetrieb und pₐₘₐₓ, p_{bmax} als maximal zulässige Stelldrücke in Abhängigkeit des aktuellen Fahrbetriebs (α_{P}, n_{P}) und des Limits pₘₐₓ erhalten. Dies gilt sowohl für den Zug- oder Pumpenbetrieb P, als auch für den Brems- oder Motorbetrieb M der Hydropumpe 2.

Zwar kann dem Verfahren 52 der Schwenkwinkel α_{P} oder das Hubvolumen V_{P} beispielsweise durch Erfassung bereitgestellt werden. Alternativ kann das in der Steuereinheit 32 zur Ausführung abgelegte Verfahren 52 jedoch einen Schritt der Bilanzierung aufweisen. Hierzu wird der Schwenkwinkel ap aus der erfassten Pumpendrehzahl np, Hydromotordrehzahl n_{M}, sowie dem aus der elektroproportionalen Direktansteuerung bekannten Schluckvolumen V_{M} des Hydromotors über die Steuereinheit 32 ermittelt. Da in diese einfache Bilanz keine Leckage eingeht, stellt diese Art der Ermittlung des Schwenkwinkels ap eine Abschätzung dar.

Figur 3b zeigt eine Charakteristik des Fahrzeugs oder des Fahrantriebs 1; 101, in der über die Fahrzeuggeschwindigkeit der tractive effort des Fahrantriebes aufgetragen ist, wobei die Nenndrehzahl der Antriebsmaschine als Parameter dargestellt ist.

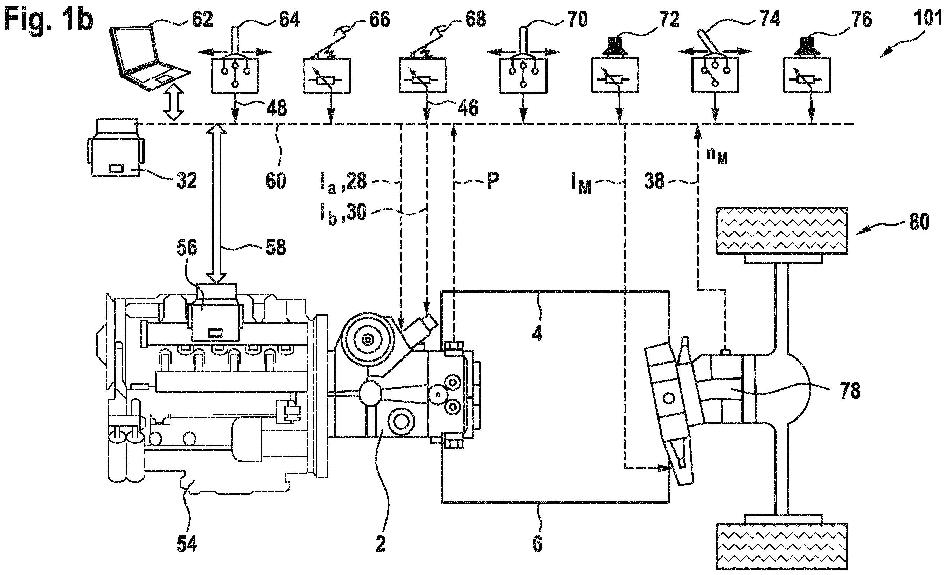

Figur 1b zeigt ein zweites Ausführungsbeispiel eines hydrostatischen Fahrantriebes 101, der im Wesentlichen demjenigen gemäß Figur 1a gleicht. Es wird daher lediglich auf die Unterschiede zum vorgenannten Ausführungsbeispiel gemäß Figur 1a eingegangen. Dargestellt ist nun ergänzend eine mit der Hydropumpe 2 über die Triebwelle 8 gemäß Figur 1a gekoppelte Antriebsmaschine 54 mit einem Antriebsmaschinensteuergerät 56. Letztgenanntes ist über einen CAN-Bus 58 und über einen Bus 60 mit der elektronischen Steuereinheit 32 verbunden. An den Bus 60 angeschlossen sind weiterhin eine Serviceschnittstelle 62, über die ein Bediener oder Wartungspersonal Zugriff auf alle an den Bus 60 angeschlossenen Komponenten hat. Diese sind zusätzlich ein Fahrtrichtungsschalter 64, ein Bremspedal 66, ein Fahr- oder Gaspedal 68, ein Fahrmodus-Auswahlschalter 70, ein Geschwindigkeitslimit-Schalter 72, ein Geschwindigkeitslimit-Auswahlschalter 74, sowie ein Handdrossel-Schalter 76.

Mit dem dargestellten Hydromotor 78 ist eine Achse oder ein Abtrieb 80 gekoppelt. Der Hydromotor 78 ist über die Arbeitsleitungen 4, 6 mit der Hydropumpe 2 im geschlossenen hydraulischen Kreislauf angeordnet. Er ist als Axialkolbenmaschine in Schrägachsenbauweise mit verstellbarem Verdrängungsvolumen V_{M} ausgestaltet. Dabei ist sein Verdrängungsvolumen V_{M} elektroproportional direkt gesteuert und verhält sich daher proportional zu einem Ansteuerstrom I_{M}, welcher von der elektronischen Steuereinheit 32 ausgegeben wird.

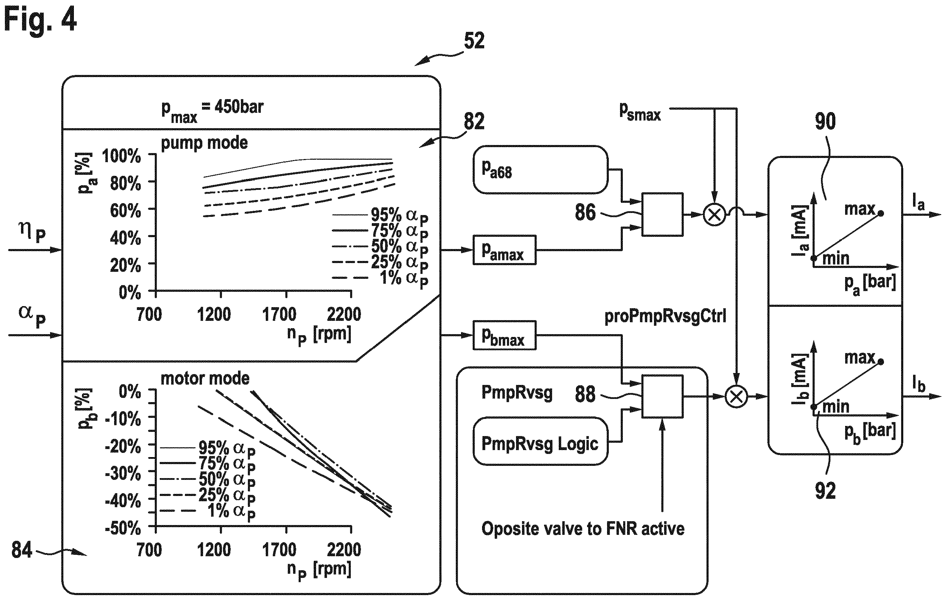

Die vorangegangenen, sowie die folgenden Betrachtungen zum erfindungsgemäßen Verfahren 52 gelten für beide hydrostatischen Fahrantriebe 1; 101 gemäß den Figuren 1a und 1b. Es folgt die etwas detailliertere Beschreibung des erfindungsgemäßen Verfahrens 52 anhand Figur 4.

Wie bereits erwähnt, sind die Eingangsgrößen des Verfahrens das ermittelte oder abgeschätzte Hubvolumen V_{P} oder der entsprechende Schwenkwinkel ap der Hydropumpe 2, deren Drehzahl np, sowie ein vorgegebenes Limit des Drucks oder Arbeitsdrucks pₘₐₓ, in diesem Fall von 450 bar. Gemäß Figur 1a und 1b ist in der elektronischen Steuereinheit 32 für jedes Drucklimit pₘₐₓ eine Pumpencharakteristik oder Pumpenkennlinie 82 für den Betrieb der Hydropumpe 2 im Zugbetrieb (Pumpenbetrieb) und 84 für den Brems- oder Motorbetrieb der Hydropumpe 2 abgelegt. Beschrieben ist dabei jeweils der jeweilige Stelldruck pₐ bzw. p_{b} in Abhängigkeit der Pumpendrehzahl np und dem Pumpenschwenkwinkel ap (in Prozent des maximalen Schwenkwinkels). Die Stelldrücke pₐ und p_{b} sind ebenso in Prozent des in der Steuerdruckleitung 20 maximal zur Verfügung stehenden Steuer- oder Stelldrucks pₛₘₐₓ dargestellt. Dabei erstreckt sich die Skala des im Motorbetrieb für die zweite Stellkammer 14 vorgesehenen zweiten Stelldrucks p_{b} von Null bis -50 %. Das Vorzeichen Plus und Minus repräsentiert die unterschiedlichen Wirkrichtung des Druckes aufgrund der entgegenwirkenden Stellkammern 12, 14.

In Abhängigkeit der aktuellen Werte np, ap und pₘₐₓ des Betriebszustandes des Fahrantriebes wird gemäß dem Verfahren 52 zunächst der jeweils maximal zulässige Stelldruck pₐₘₐₓ für den Zugbetrieb und p_{bmax} für den Bremsbetrieb ermittelt. Dies erfolgt bei festgesetztem Limit pₘₐₓ permanent neu, da sich insbesondere ap im Betrieb aufgrund von dessen Lastabhängigkeit ändert. Für den Zugbetrieb erfolgt dann der Abgleich eines angeforderten ersten Stelldrucks pₐ₆₈, der aus der Betätigung des Fahrpedals 68 gemäß Figur 1b (auch gültig für Figur 1) herrührt. Letztgenannter Stelldruck und der ermittelte maximale zulässige erste Stelldruck pₐₘₐₓ werden von der Steuereinheit 32 verglichen und der der kleinere wird im Schritt 86 ausgewählt. Analoges erfolgt im Schritt 88 mit dem maximal zulässigen zweiten Stelldruck p_{bmax}. Der jeweils aus den Schritten 86 und 88 ausgewählte kleinere der Stelldrücke wird dann wieder mit dem maximal zur Verfügung stehenden Steuerdruck pₛₘₐₓ multipliziert, wodurch aus dem bis dahin in Prozent angegebenem Stelldruck ein realer Stelldruck pₐ oder p_{b} resultiert. Dieser geht in eine jeweilige Ventilkennlinie 90 bzw. 92 für das Druckreduzierventil 18 bzw. 26 ein, aus der dann der zugehörige Ansteuerstrom Iₐ bzw. I_{b} für die Ansteuerung des Druckreduzierventils 18 bzw. 26 ermittelt wird.

Auf diese Weise werden erfindungsgemäß aus der Drehzahl np, dem Schwenkwinkel ap, den Pumpenkennlinien 82, 84, dem maximal zulässigen Druck p, dem angeforderten Stelldruck pₐ₆₈ und den Ventilkennlinien 90, 92 die im normalen Fahrbetrieb benötigten Stelldrücke pₐ, p_{b} und die maximal zulässigen Stelldrücke pₐₘₐₓ, p_{bmax} ermittelt wobei der jeweils kleinere zum Ansteuerstrom Iₐ, I_{b} führt. Sollte also der gemäß Fahrerwunsch ausgegebene Stelldruck pₐ₆₈ oberhalb des Limits pₐₘₐₓ oder p_{bmax} liegen, so wird der Ansteuerstrom pₐ oder p_{b} begrenzt oder abgeschnitten.

Offenbart ist eine als Pumpe betreibbare Hydromaschine mit einem elektrisch gesteuert, hydraulisch mittels Stelldruck verstellbarem, Hubvolumen. Dabei ist - sowohl für einen Pumpen- als auch Motorbetrieb der Pumpe - ein Stelldruck der Pumpe zur Verstellung des Hubvolumens unter Kenntnis einer Pumpenphysik in Abhängigkeit einer aktuellen Pumpendrehzahl und eines aktuellen Pumpenvolumens unter allen Betriebsbedingungen elektronisch gesteuert begrenzbar und ein maximales Limit eines von der Pumpe aufgebauten Drucks ist stets einhaltbar.
Offenbart sind weiterhin ein Fahrantrieb mit der Pumpe, sowie ein Verfahren zu dessen Steuerung.

## Patentansprüche

1. Hydrostatischer Fahrantrieb mit einer Hydropumpe (2), die mit einer Antriebsmaschine (54) koppelbar ist, zur Druckmittelversorgung eines mit einem Abtrieb (80) koppelbaren Hydromotors (78) des Fahrantriebes (1; 101), wobei die Hydropumpe (2) einen Stellzylinder (10) mit wenigstens einem Zylinderraum (12, 14) und ein darüber verstellbares Hubvolumen (V_{P}) hat und wenigstens ein elektrisch ansteuerbares Druckventil (18, 26) vorgesehen ist, über das der Zylinderraum (12, 14) mit einem verstellend wirksamen Stelldruck (pₐ, p_{b}) beaufschlagbar ist, und mit einer Einrichtung (32), über die ein Druck (p) der Hydropumpe (2) mittels Beeinflussung des Stelldrucks (pₐ, p_{b}) limitierbar ist, **dadurch gekennzeichnet, dass** die Einrichtung derart ausgestaltet ist, dass über sie der Druck (p) gesteuert limitierbar ist.

2. Fahrantrieb nach Anspruch 1, wobei die Einrichtung eine elektronische Steuereinheit (32) ist.

3. Fahrantrieb nach Anspruch 1 oder 2, wobei die Einrichtung (32) eine Kennlinie (82, 84) der Hydropumpe (2) hat, in der der Stelldruck (pₐ, p_{b}) in Abhängigkeit vom Limit (pₘₐₓ) des Drucks (p) und zumindest vom Hubvolumen (V_{P}) der Hydropumpe (2) oder einer dieses Hubvolumen (V_{P}) repräsentierenden Größe (ap) der Hydropumpe (2) beschrieben ist.

4. Fahrantrieb nach einem der Ansprüche 1 bis 3, wobei die Einrichtung (32) ein Kennfeld (50) der Hydropumpe (2) hat, in der der Stelldruck (pₐ, p_{b}) in Abhängigkeit des Drucks (p) und zumindest des Hubvolumens (V_{P}) der Hydropumpe (2) oder einer dieses Hubvolumen (V_{P}) repräsentierenden Größe (ap) der Hydropumpe (2) beschrieben ist.

5. Fahrantrieb nach Anspruch 3 und / oder 4, wobei in der Kennlinie (82, 84) und / oder dem Kennfeld (50) der Stelldruck (pₐ, p_{b}) in Abhängigkeit einer Drehzahl (np) der Hydropumpe (2) beschrieben ist.

6. Fahrantrieb zumindest nach Anspruch 3, wobei über die Einrichtung (32) aus der Kennlinie (82, 84) ein maximal zulässiger Stelldruck (pₐₘₐₓ, p_{bmax}) ermittelbar ist.

7. Fahrantrieb nach einem der vorhergehenden Ansprüche, mit einer Anforderungsschnittstelle (66, 68), die mit der Einrichtung (32) signalverbindbar ist, und über die eine Geschwindigkeitsanforderung an die Einrichtung übermittelbar ist.

8. Fahrantrieb nach Anspruch 7 und zumindest nach Anspruch 4, wobei über die Einrichtung (32) aus dem Kennfeld (50) ein gemäß der Geschwindigkeitsanforderung notwendiger Stelldruck (pₐ₆₈) ermittelbar ist.

9. Fahrantrieb zumindest nach Anspruch 6 und 8, wobei über die Einrichtung (32) ein kleinerer aus maximal zulässigem (pₐₘₐₓ, p_{bmax}) und notwendigem Stelldruck (pₐ₆₈) ermittelbar und / oder auswählbar ist.

10. Fahrantrieb nach einem der vorhergehenden Ansprüche, wobei die Einrichtung eine Ventilkennlinie (90, 92) des Druckventils (18, 26) hat, in der ein elektrischer Ansteuerstrom (Iₐ, I_{b}) in Abhängigkeit des Stelldrucks (pₐ, p_{b}) beschrieben ist.

11. Verfahren zum Limitieren eines Drucks (p) einer Hydropumpe (2) eines Fahrantriebes (1; 101), der gemäß einem der vorhergehenden Ansprüche ausgestaltet ist, **gekennzeichnet durch** einen Schritt
- Steuerndes Limitieren des Drucks (p) mittels Beeinflussung des Stelldrucks (pₐ, p_{b}), über die Einrichtung (32).

12. Verfahren nach Anspruch 11 mit einem Schritt oder Schritten
- Ermitteln eines Zugbetriebes (P) oder Bremsbetriebes (M) des Fahrantriebes (1; 101), und / oder
- Ermitteln einer Fahrtrichtung des Fahrantriebes (1; 101), und / oder
- Auswählen von Kennlinie (82, 84, 90, 92) und / oder Kennfeld (50) der Hydropumpe (2) und / oder des Druckventils (18, 26) in Abhängigkeit des ermittelten Betriebes (P, M) und / oder der ermittelten Fahrtrichtung,
über die Einrichtung (32).

13. Verfahren nach Anspruch 11 oder 12 mit einem Schritt
- Ermitteln eines maximal zulässigen Stelldrucks (pₐₘₐₓ, p_{bmax}) aus einer Kennlinie (82, 84) der Hydropumpe (2), in der der Stelldruck (pₐ, p_{b}) in Abhängigkeit eines Limits (pₘₐₓ) des Drucks (p) und zumindest in Abhängigkeit eines Hubvolumens (V_{P}) der Hydropumpe (2) oder einer dieses Hubvolumen (V_{P}) repräsentierenden Größe (ap) der Hydropumpe (2) beschrieben ist,
über die Einrichtung (32).

14. Verfahren nach einem der Ansprüche 11 bis 13 mit einem Schritt
- Ermitteln eines notwendigen Stelldrucks (pₐ₆₈) gemäß einer Geschwindigkeitsanforderung aus einem Kennfeld (50) der Hydropumpe (2), in der der Stelldruck (pₐ, p_{b}) in Abhängigkeit des Drucks (p) und zumindest in Abhängigkeit eines Hubvolumens (V_{P}) der Hydropumpe (2) oder einer dieses Hubvolumen (V_{P}) repräsentierenden Größe (ap) der Hydropumpe (2) beschrieben ist,
über die Einrichtung (32).

15. Verfahren nach Anspruch 13 und 14 mit Schritten
- Ermitteln eines kleineren aus notwendigem (pₐ₆₈) und maximal zulässigem Stelldruck (Pamax, Pbmax),
- Ermitteln eines elektrischen Ansteuerstroms (Iₐ, I_{b}) des Druckventils (18, 26) aus einer Ventilkennlinie (90, 92) des Druckventils(18, 26), in der der elektrische Ansteuerstrom (Iₐ, I_{b}) in Abhängigkeit des Stelldrucks (pₐ, p_{b}) beschrieben ist, gemäß dem ermittelten kleineren der Stelldrücke, und
- Ansteuern des Druckventils (18, 26) mit diesem Ansteuerstrom (Iₐ, I_{b}), über die Einrichtung (32).

## Claims

1. Hydrostatic travel drive with a hydraulic pump (2) which can be coupled to a drive machine (54) for the purpose of supplying pressure medium to a hydraulic motor (78) of the travel drive (1; 101) that can be coupled to an output (80), wherein the hydraulic pump (2) has an actuating cylinder (10) with at least one cylinder chamber (12, 14) and a swept volume (Vp) which can be adjusted via it, and at least one electrically activatable pressure valve (18, 26) is provided via which the cylinder chamber (12, 14) can be charged with an adjustingly active actuating pressure (pₐ, p_{b}), and with a device (32) via which a pressure (p) of the hydraulic pump (2) can be limited by means of influencing the actuating pressure (pₐ, p_{b}), **characterized in that** the device is designed in such a way that the pressure (p) can be limited in a controlled manner via it.

2. Travel drive according to Claim 1, wherein the device is an electronic control unit (32).

3. Travel drive according to Claim 1 or 2, wherein the device (32) has a characteristic curve (82, 84) of the hydraulic pump (2), in which the actuating pressure (pₐ, p_{b}) is described in dependence on the limit (pₘₐₓ) of the pressure (p) and at least on the swept volume (V_{P}) of the hydraulic pump (2) or on a variable (α_{P}) of the hydraulic pump (2) that represents this swept volume (V_{P}).

4. Travel drive according to one of Claims 1 to 3, wherein the device (32) has a characteristic map (50) of the hydraulic pump (2), in which the actuating pressure (pₐ, p_{b}) is described in dependence on the pressure (p) and at least on the swept volume (V_{P}) of the hydraulic pump (2) or on a variable (α_{P}) of the hydraulic pump (2) that represents this swept volume (V_{P}).

5. Travel drive according to Claim 3 and/or 4, wherein the actuating pressure (pₐ, p_{b}) is described in dependence on a rotational speed (n_{P}) of the hydraulic pump (2) in the characteristic curve (82, 84) and/or the characteristic map (50).

6. Travel drive at least according to Claim 3, wherein a maximum permissible actuating pressure (pₐₘₐₓ, p_{bmax}) can be determined via the device (32) from the characteristic curve (82, 84).

7. Travel drive according to one of the preceding claims, having a request interface (66, 68) which can be signal-connected to the device (32) and via which a speed request can be transmitted to the device.

8. Travel drive according to Claim 7 and at least according to Claim 4, wherein an actuating pressure (pₐ₆₈) necessary according to the speed request can be determined via the device (32) from the characteristic map (50).

9. Travel drive at least according to Claims 6 and 8, wherein a lower of maximum permissible (pₐₘₐₓ, p_{bmax}) and necessary actuating pressure (pₐ₆₈) can be determined and/or selected via the device (32).

10. Travel drive according to one of the preceding claims, wherein the device has a valve characteristic curve (90, 92) of the pressure valve (18, 26), in which an electric activating current (Iₐ, I_{b}) is described in dependence on the actuating pressure (pₐ, p_{b}).

11. Method for limiting a pressure (p) of a hydraulic pump (2) of a travel drive (1; 101) which is designed according to one of the preceding claims, **characterized by** a step of
- controlled limiting of the pressure (p) by means of influencing the actuating pressure (pₐ, p_{b}), via the device (32).

12. Method according to Claim 11 having a step or steps of
- determining a traction mode (P) or braking mode (M) of the travel drive (1; 101), and/or
- determining a direction of travel of the travel drive (1; 101), and/or
- selecting characteristic curve (82, 84, 90, 92) and/or characteristic map (50) of the hydraulic pump (2) and/or of the pressure valve (18, 26) in dependence on the determined mode (P, M) and/or on the determined direction of travel,
via the device (32).

13. Method according to Claim 11 or 12 having a step of
- determining a maximum permissible actuating pressure (pₐₘₐₓ, p_{bmax}) from a characteristic curve (82, 84) of the hydraulic pump (2), in which the actuating pressure (pₐ, p_{b}) is described in dependence on a limit (pₘₐₓ) of the pressure (p) and at least in dependence on a swept volume (V_{P}) of the hydraulic pump (2) or on a variable (α_{P}) of the hydraulic pump (2) that represents this swept volume (V_{P}),
via the device (32).

14. Method according to one of Claims 11 to 13 having a step of
- determining a necessary actuating pressure (pₐ₆₈) according to a speed request from a characteristic map (50) of the hydraulic pump (2), in which the actuating pressure (pₐ, p_{b}) is described in dependence on the pressure (p) and at least in dependence on a swept volume (V_{P}) of the hydraulic pump (2) or on a variable (α_{P}) of the hydraulic pump (2) that represents this swept volume (V_{P}),
via the device (32).

15. Method according to Claims 13 and 14 having steps of
- determining a lower of necessary (pₐ₆₈) and maximum permissible actuating pressure (pₐₘₐₓ, p_{bmax}),
- determining an electric activating current (Iₐ, I_{b}) of the pressure valve (18, 26) from a valve characteristic curve (90, 92) of the pressure valve (18, 26), in which the electric activating current (Iₐ, I_{b}) is described in dependence on the actuating pressure (pₐ, p_{b}), according to the determined lower of the actuating pressures, and
- activating the pressure valve (18, 26) with this activating current (Iₐ, I_{b}),
via the device (32).

## Revendications

1. Mécanisme d'entraînement hydrostatique comportant une pompe hydraulique (2) qui peut être accouplée à une machine d'entraînement (54), pour l'alimentation en fluide sous pression d'un moteur hydraulique (78), pouvant être accouplé à une sortie (80), du mécanisme d'entraînement (1; 101), dans lequel la pompe hydraulique (2) a un cylindre de réglage (10) doté d'au moins une chambre de cylindre (12, 14) et une cylindrée (V_{P}) pouvant être réglée par le biais du cylindre de réglage et au moins une soupape de pression (18, 26) pouvant être commandée électriquement est prévue, par le biais de laquelle la chambre de cylindre (12, 14) peut être soumise à une pression de réglage (pₐ, p_{b}) opérant de manière à effectuer un réglage, et comportant un dispositif (32), par le biais duquel une pression (p) de la pompe hydraulique (2) peut être limitée en influençant la pression de réglage (pₐ, p_{b}), **caractérisé en ce que** le dispositif est configuré de telle sorte que la pression (p) peut être limitée de manière commandée par le biais de celui-ci.

2. Mécanisme d'entraînement selon la revendication 1, dans lequel le dispositif est une unité de commande électronique (32).

3. Mécanisme d'entraînement selon la revendication 1 ou 2, dans lequel le dispositif (32) a une courbe caractéristique (82, 84) de la pompe hydraulique (2), courbe caractéristique dans laquelle la pression de réglage (pₐ, p_{b}) est décrite en fonction de la limite (pₘₐₓ) de la pression (p) et au moins de la cylindrée (V_{P}) de la pompe hydraulique (2) ou d'une grandeur (α_{P}) de la pompe hydraulique (2) représentant cette cylindrée (V_{P}).

4. Mécanisme d'entraînement selon l'une des revendications 1 à 3, dans lequel le dispositif (32) a un diagramme caractéristique (50) de la pompe hydraulique (2), diagramme caractéristique dans lequel la pression de réglage (pₐ, p_{b}) est décrite en fonction de la pression (p) et au moins de la cylindrée (V_{P}) de la pompe hydraulique (2) ou d'une grandeur (α_{P}) de la pompe hydraulique (2) représentant cette cylindrée (V_{P}).

5. Mécanisme d'entraînement selon la revendication 3 et/ou 4, dans lequel la pression de réglage (pₐ, p_{b}) est décrite en fonction d'un régime (n_{P}) de la pompe hydraulique (2) dans la courbe caractéristique (82, 84) et/ou le diagramme caractéristique (50).

6. Mécanisme d'entraînement au moins selon la revendication 3, dans lequel une pression de réglage admissible maximale (pₐₘₐₓ, P_{bmax}) peut être déterminée par le biais du dispositif (32) à partir de la courbe caractéristique (82, 84).

7. Mécanisme d'entraînement selon l'une des revendications précédentes, comportant une interface de demande (66, 68) qui peut être reliée au dispositif (32) par des signaux et par le biais de laquelle une demande de vitesse peut être transmise au dispositif.

8. Mécanisme d'entraînement selon la revendication 7 et au moins selon la revendication 4, dans lequel une pression de réglage (pₐ₆₈) nécessaire conformément à la demande de vitesse peut être déterminée par le biais du dispositif (32) à partir du diagramme caractéristique (50) .

9. Mécanisme d'entraînement au moins selon les revendications 6 et 8, dans lequel une pression de réglage plus petite parmi la pression de réglage admissible maximale (pₐₘₐₓ, P_{bmax}) et la pression de réglage nécessaire (pₐ₆₈) peut être déterminée et/ou peut être sélectionnée par le biais du dispositif (32).

10. Mécanisme d'entraînement selon l'une des revendications précédentes, dans lequel le dispositif a une courbe caractéristique (90, 92) de la soupape de pression (18, 26), courbe caractéristique dans laquelle un courant de commande électrique (Iₐ, I_{b}) est décrit en fonction de la pression de réglage (pₐ, p_{b}).

11. Procédé permettant de limiter une pression (p) d'une pompe hydraulique (2) d'un mécanisme d'entraînement (1; 101) qui est configuré selon l'une des revendications précédentes,
**caractérisé par** une étape
- de limitation, de manière à effectuer une commande, de la pression (p) en influençant la pression de réglage (pₐ, p_{b}),
par le biais du dispositif (32).

12. Procédé selon la revendication 11, comprenant une étape ou des étapes
- de détermination d'un fonctionnement de traction (P) ou d'un fonctionnement de freinage (M) du mécanisme d'entraînement (1; 101), et/ou
- de détermination d'une direction de conduite du mécanisme d'entraînement (1; 101), et/ou
- de sélection de la courbe caractéristique (82, 84, 90, 92) et/ou du diagramme caractéristique (50) de la pompe hydraulique (2) et/ou de la soupape de pression (18, 26) en fonction du fonctionnement déterminé (P, M) et/ou de la direction de conduite déterminée,
par le biais du dispositif (32).

13. Procédé selon la revendication 11 ou 12, comprenant une étape
- de détermination d'une pression de réglage admissible maximale (pₐₘₐₓ, p_{bmax}) à partir d'une courbe caractéristique (82, 84) de la pompe hydraulique (2), courbe caractéristique dans laquelle la pression de réglage (pₐ, p_{b}) est décrite en fonction d'une limite (pₘₐₓ) de la pression (p) et au moins en fonction d'une cylindrée (V_{P}) de la pompe hydraulique (2) ou d'une grandeur (α_{P}) de la pompe hydraulique (2) représentant cette cylindrée (Vₚ),
par le biais du dispositif (32).

14. Procédé selon l'une des revendications 11 à 13, comportant une étape
- de détermination d'une pression de réglage nécessaire (pₐ₆₈) conformément à une demande de vitesse à partir d'un diagramme caractéristique (50) de la pompe hydraulique (2), diagramme caractéristique dans lequel la pression de réglage (pₐ, p_{b}) est décrite en fonction de la pression (p) et au moins en fonction d'une cylindrée (V_{P}) de la pompe hydraulique (2) ou d'une grandeur (α_{P}) de la pompe hydraulique (2) représentant cette cylindrée (V_{P}),
par le biais du dispositif (32).

15. Procédé selon les revendications 13 et 14, comportant les étapes
- de détermination d'une pression de réglage plus petite parmi la pression de réglage nécessaire (pₐ₆₈) et la pression de réglage admissible maximale (pₐₘₐₓ, p_{bmax}),
- détermination d'un courant de commande électrique (Iₐ, I_{b}) de la soupape de pression (18, 26) à partir d'une courbe caractéristique (90, 92) de la soupape de pression (18, 26), courbe caractéristique dans laquelle le courant de commande électrique (Iₐ, I_{b}) est décrit en fonction de la pression de réglage (pₐ, p_{b}), conformément à la plus petite pression déterminée parmi les pressions de réglage, et
- commande de la soupape de pression (18, 26) avec ce courant de commande (Iₐ, I_{b}),
par le biais du dispositif (32).
